Europäisches Patentamt

European Patent Office

Office européen des brevets

(11) Veröffentlichungsnummer: **0 302 179 B1**

# (12) EUROPÄISCHE PATENTSCHRIFT

(45) Veröffentlichungstag der Patentschrift: 06.11.91

(51) Int. Cl.⁵: **C05F 7/00**

(21) Anmeldenummer: **88105815.0**

(22) Anmeldetag: **12.04.88**

(54) Verfahren zum Humifizieren von Klärschlämmen.

(30) Priorität: **05.08.87 DE 3725988**

(43) Veröffentlichungstag der Anmeldung:
**08.02.89 Patentblatt 89/06**

(45) Bekanntmachung des Hinweises auf die
Patenterteilung:
**06.11.91 Patentblatt 91/45**

(84) Benannte Vertragsstaaten:
**AT CH DE LI LU**

(56) Entgegenhaltungen:
**EP-A- 0 221 219**
**DE-A- 2 415 068**
**DE-A- 3 508 728**
**FR-A- 2 522 642**

**FORUM STÄDTE-HYGIENE, Band 30,
September/Oktober 1979, Seiten 208-210; E.
SPOHN: "Nutzbarmachung von Klär-
schlamm"**

(73) Patentinhaber: **Rhodovi, Hans-Georg**
**Liemer Strasse 26**
**W-4902 Bad Salzuflen 1(DE)**

(72) Erfinder: **Rhodovi, Hans-Georg**
**Liemer Strasse 26**
**W-4902 Bad Salzuflen 1(DE)**

(74) Vertreter: **Koepe, Gerd L., Dipl.-Chem.**
**Stuntzstrasse 16**
**W-8000 München 80(DE)**

## Beschreibung

Die Erfindung betrifft ein Verfahren zum Humifizieren von Klärschlämmen.

Bei der Reinigung von Abwässern aus industriellen Kläranlagen und aus kommunalen Kläranlagen, die die Abwässer aus privaten Haushalten aufarbeiten, fallen in steigenden Mengen unterschiedlich zusammengesetzte Klärschlämme an. Deren Beseitigung, die bisher zum überwiegenden Anteil durch Ablagerung auf Deponien erfolgte, bereitet zunehmend Probleme. Diese liegen darin, daß nicht nur die Klärschlamm-Mengen steigen und Grenzen der Deponie-Kapazitäten erkennen lassen (Chemische Rundschau 1988, Nr. 7 vom 19.2.1988, S. 15), sondern daß auch in den Klärschlämmen enthaltene schädliche Bestandteile immer häufiger eine Sonderbehandlung erforderlich machen.

Zur Beseitigung üblicher, keine schädlichen Inhaltsstoffe enthaltender Klärschlämme wurde in der letzten Zeit eine Vielzahl von Vorschlägen gemacht, die zu einem großen Anteil darauf hinauslaufen, die Klärschlämme nicht durch Verbringen auf Deponien zu beseitigen, sondern vielmehr einer Verwertung zuzuführen. Dies bietet sich insbesondere dann an, wenn restliche Anteile verwertbarer Abfallstoffe im Schlamm ein Recycling in den natürlichen Kreislauf ermöglichen.

Bei der sogenannten "Verrottung" oder "Humifizierung" bauen aerobe Mikroorganismen feste organische Substanzen allmählich biologisch ab und wandeln diese in Humus um, also in eine stabile, im wesentlichen alle Nährstoffe für Pflanzen enthaltende und dadurch als Bodenverbesserer geeignete Masse. Von der Humifizierung zu unterscheiden und als deren Vorstufe anzusehen ist die Kompostierung. Das Produkt - Kompost - hat im Gegensatz zum geruchsneutralen Humus einen pilzigen bis erdigen Geruch, enthält meist noch pathogene Keime und ist vor der vollständigen Humifizierung als ausgewogener Bodenverbesserer nicht geeignet.

Voraussetzung für eine unter aeroben Bedingungen ablaufende Rotte zur Bildung von Humus sind die Einstellung eines für den mikrobiellen Abbau erforderlichen Wassergehaltes des Schlamms, eine ausreichende Belüftung, d.h. Sauerstoffversorgung, der Rotte sowie die Voreinstellung eines für die Wirkung der aeroben Mikroorganismen geeigneten C/N-Verhältnisses, das üblicherweise im Bereich von 15 bis 30 : 1 liegt.

In E. Spohn, "Nutzbarmachung von Klärschlamm"; in: "Forum Städtehygiene" 30, 208 (1979) wird über ein Verfahren berichtet, in dem in sogenannten "Rottemieten" Klärschlamm kompostiert wird. Als C-Quelle wird dem Klärschlamm vor der Kompostierung Sägemehl, gemahlene Baumrinde oder dergleichen infeinteiliger Form zugesetzt. Derartige Zusätze werden auch deswegen als vorteilhaft angesehen, weil sie den relativ hohen Feuchtigkeitsgehalt der Klärschlämme selbst nach der Entwässerung verringern und als Trockenzusatz dazu beitragen, eine optimale Rottefeuchtigkeit einzustellen. Nachteile der in dieser Druckschrift beschriebenen Verfahren sind darin zu sehen, daß Sägemehl oder gemahlene Baumrinde als Trockenzusätze nicht überall preiswert zur Verfügung gestellt werden können und außerdem zwar gute Kohlenstoffträger sind, aber viel zu feinteilig sind, um einen für einen aeroben Verrottungsvorgang ausreichenden Sauerstoffzutritt zu gestatten. Diese unter dem Begriff "Makroporenraum" zu fassende Eigenschaft des Rottematerials ist jedoch essentiell. Folglich sind die beschriebenen Mieteverfahren sehr arbeits- und lohnintensiv, da nur durch sehr häufiges Umsetzen der Mieten, also ein Umwenden des Materials unter Durchmischung und Schaffung neuer "Makroporenräume", eine ausreichende Sauerstoffversorgung und damit ein aerober Kompostier-Ablauf gewährleistet werden kann.

Die bisher bekannten Mietenverfahren ermöglichen es zudem nicht, die Temperatur des Rottevorgangs in einfacher Weise zu überwachen und zu beeinflussen. Dieser Nachteil ließ sich weitgehend dadurch beseitigen, daß mehr oder weniger aufwendige Verrottungsanlagen vorgeschlagen wurden, die nicht nur eine Steuerung des Sauerstoffzutritts ermöglichen und damit eine gute Durchlüftung der Rotte garantieren, sondern auch eine Steuerung des Wasserhaushaltes erlauben und damit verhindern, daß die zu feuchte Rotte zusammensinkt, nicht genügend durchlüftet wird und dadurch der aerobe Kompostierprozeß sukzessive in einen anaeroben Fäulnisprozeß übergeht, der durch die entsprechenden anaeroben Mikroorganismen gefördert und an einem üblen, weithin wahrnehmbaren Geruch der Rotte erkannt wird. Turmartige Biozellen-Reaktoren werden beispielsweise in H. Schwanhäuser, "Erfahrungen mit dem Schlammverrottungssystem Dambach-Schnorr in Rastatt"; in: "Müll und Abfall" 1 (1978), Seite 20, beschrieben. Einem entwässerten Frischschlamm mit einem Feststoffgehalt im Bereich von 22 bis 25 % werden gemahlene Holzabfälle (Baumrinde, Holzschliff) zugesetzt. Eine derartige Mischung (C/N-Verhältnis: ca. 25 : 1) wird in einem wechselseitig belüfteten, bis zu 10 Etagen aufweisenden Rotteturm biologisch abgebaut. In ähnlicher Weise beschreibt die DE-AS 27 21 349 ein Verfahren zur Kompostierung von Klärschlamm oder anderen organischen Abfallstoffen in einem aerob betriebenen kontinuierlichen Verfahren, bei dem der mikrobiologische Abbau in einem mit Hilfe einer Saugvorrichtung ausreichend belüfteten Belüftungsreaktor stattfindet. Der Klärschlamm wird vor Einfüllen in den Reaktor entwässert und in einer Mischanlage mit einem geeigneten Kohlenstoffträger, beispielsweise Sägemehl, gehäckseltem Stroh, Torf oder ähnlichem vermischt, wobei sich ein C/N-Verhältnis von ca. 30 : 1 einstellen soll. Wesentlicher Nachteil derartiger, in den genannten Druckschriften beschriebener Kompostierverfahren ist der hohe Aufwand, der für den Betrieb einer derartigen Anlage erbracht werden muß. Die entsprechenden Reaktoren sind aufgrund des komplizierten Reaktionsablaufes aufwendig gebaut, nur mit erhöhtem Steuerungsaufwand zu betreiben und passen sich aufgrund ihrer äußeren Ausmaße, insbesondere ihrer Höhe, nur selten harmonisch in das Landschaftsbild ein.

Ein Verfahren zur aeroben Verrottung von organischen Abfallstoffen in einem Verrottungsbunker, der aus mindestens zwei belüfteten und untereinander angeordneten Kammern besteht, in die das Verrottungsgut portionsweise eingeführt und innerhalb der einzelnen Kammern mit einer ausreichenden Menge Sauerstoff belüftet wird, wird zudem in der DE-PS 29 37 390 beschrieben. Als C-Quelle wird bei dem beschriebenen Verfahren sogenanntes "Komposstrohgut" verwendet. In der DE-A 3 508 728 wird die Verkompostierung von Klärschlämmen durch Vermischen mit Abfallschlämmen aus Zuckerrübenfabriken und mit bereits fertigem Kompost und anschließende Verrottung beschrieben. Nachteil dieses sog. "Rückgutverfahrens" ist es, daß bereits verkompostiertes Material in die neuerliche Verkompostierung einbezogen werden muß. Außerdm besteht bei Verwendung der genannten Komponenten die Gefahr, daß das Rottematerial zu feucht wird und zusammensinkt und damit von der aeroben Verrottung in die anaerobe Fäulnis mit allen damit verbundenen ungünstigen Begleiterscheinungen übergeht. Ein Verfahren zum Kompostieren kommunaler Klärschlämme unter ausschließlicher Verwendung von Altpapier als C-Träger wird in der DE-OS 30 15 246 beschrieben. Nachteile dieses Verfahrens sind darin zu sehen, daß die auf dem Altpapier vorhandene Druckerschwärze durch Flotation unter Zusatz geeigneter Hilfsstoffe vor der Kompostierung entfernt werden muß. Dies kann jedoch die Wirkungsweise der Mikroorganismen in der späteren Humifizierung beeinträchtigen.

Allen genannten Verfahren ist es gemeinsam, daß sie nur eine Kompostierung der Klärschlämme bewirken, jedoch eine vollständige Humifizierung unter Ausbildung eines als Bodenverbesserer geeigneten und alle essentiellen Wirkstoffe für das Pflanzenwachstum aufweisenden Humus nicht stattfindet. Diese ist jedoch angestrebt, da sich das Produkt im Garten- und Landschaftsbau vorteilhaft einsetzen läßt und damit Abfallmaterial, das noch verwertbare organische Komponenten enthält, einer Recyclisierung zugänglich macht.

Aufgabe der vorliegenden Erfindung war es, ein Verfahren zum Humifizieren von Klärschlämmen zur Verfügung zu stellen, das die genannten Nachteile des Standes der Technik nicht aufweist. Insbesondere sollte eine aerobe Humifizierung von Klärschlämmen nach Beifügung geeigneter organischer Zuschlagsstoffe durchgeführt werden, die ohne aufwendige Reaktoren bzw. Verrottungtürme auskommt und trotzdem eine ausreichende Belüftung der Rotte während des Verrottungsvorgangs ermöglicht, die erforderlichen Nährstoffe für den mikrobiellen Abbau zur Verfügung stellt und die Einstellung eines Wassergehaltes erlaubt, der den aeroben Abbau der Klärschlämme bis zur vollständigen Bildung von Humus garantiert.

Es wurde nun gefunden, daß Klärschlämme nach Versetzen mit geeigneten organischen Substanzen auf ein C/N-Verhältnis im Bereich von 15 bis 30 : 1 eingestellt werden können und daraus durch selbständige Verrottung ein als Gartenerde oder Landschaftserde geeigneter Humus entsteht, wenn man die als Zuschläge verwendeten organischen Substanzen in bestimmter Weise vorbereitet und mit teilentwässerten Rohschlämmen vermischt. Für ein derartiges Verfahren sind aufwendige Rottetürme oder Bioreaktoren nicht erforderlich.

Die Erfindung betrifft ein Verfahren zum Humifizieren von Klärschlämmen unter Versetzen der teilentwässerten Rohschlämme mit einer oder mehreren organischen Substanz(en) zumindest teilweise aus der Gruppe Stroh, Holzabfälle und Altpapier, das dadurch gekennzeichnet ist, daß man stroh in lockerer Schüttung auf einer ebenen Freifläche ausbreitet, den auf einen Feststoffgehalt von mindestens 25 Gew.-% eingestellten Rohschlamm, dessen Schwermetallgehalt unter den gesetzlichen Höchstwerten liegt, in einer solchen Menge darauf aufbringt, daß das Mischungsverhältnis organische Substanz(en) : teilentwässerter Rohschlamm im Bereich von 0,1 bis 0,5 $m^3$ : $1m^2$ liegt, danach unmittelbar alle Komponenten mittels an sich bekannter Umsetzgeräte miteinander vermischt und das so entstandene Gemisch auf einer Freifläche mit einer Größe von mindestens $4m^2$ pro $m^3$ Klärschlamm der selbständigen aeroben Verrottung bis zur Humifizierung des Materials überläßt.

Unter "Humifizierung" wird hier wie in der folgenden Beschreibung und in den Patentansprüchen nicht allein die aerob-mikrobielle Umwandlung des Klärschlamms unter Mineralisierung zum Nährhumus ("Kompost") verstanden, die an einer ersten Absenkung der im Zuge der mikrobiellen Umwandlung auf 60 bis 70 $^\circ$C erhöhten Temperatur erkannt werden kann. Vielmehr zählt im Sinne der erfindungsgemäßen Verfahrens zur Humifizierung auch die durch Pilze (Cellulose und Lignin aufschließende Boden- und/oder Strahlenpilze, Actinomyceten, auch Penicillium-Arten) bewirkte weitere Umwandlung unter Aufbau wertvoller Humusstoffe zum Dauerhumus. Die erste Phase der Humifizierung wird allgemein als "Erhitzungsphase" bezeichnet. Während dieser Phase erwärmt sich die Masse des zu einer Miete aufgeschichteten Rottegemisches infolge der intensiven Abbautätigkeit aerober, termophiler Mikroorganismen auf 60 bis 70 °C. Diese Phase hält mehrere Tage an und wird durch die sogenannte "Pilzphase" abgelöst. Diese ist gekennzeichnet durch die relativ schnelle Entwicklung der Cellulose und Lignin aufschließenden und abbauenden Pilze, die mit ihren Mycelen das gesamte Rottematerial durchwuchern.

Als Klärschlämme kommen prinzipiell alle bei der Reinigung von industriellen und kommunalen Abwässern durch die unterschiedlichsten Verfahren erhaltenen Schlämme in Frage. Derartige Schlämme, beispielsweise Belebtschlämme aus den Kläranlagen, weisen eine sehr unterschiedliche Zusammensetzung auf, die im wesentlichen von den in die Kläranlagen eingespeisten Abwässern und den Abbaubedingungen abhängig ist. Entsprechend dem erfindungsgemäßen Verfahren werden zwar gewisse Mengen an Schadstoffen, insbesondere Schwermetallionen, in organischer Form im entstandenen Humus gebunden, so daß es nicht zwingend erforderlich ist, gänzlich Schwermetallionen-freie Klärschlämme als Ausgangsprodukte einzusetzen. Es ist jedoch erfindungsgemäß, in erster Linie solche Rohschlämme zu verwenden, deren Schwermetallgehalt unter den gesetzlichen Höchstwerten liegt, die im einzelnen festgelegt sind. Unter die gesetzlichen Bestimmungen fallen insbesondere solche Klärschlämme, die als solche auf landwirtschaftlich oder gärtnerisch genutzte Böden aufgebracht werden sollen. Besonders bevorzugt sind erfindungsgemäß solche Klärschlämme, deren Gehalte an toxischem Schwermetall, insbesondere Cadmium, Blei und/oder Quecksilber, im Bereich nur weniger ppm oder darunter liegt.

Die Klärschlämme werden für das erfindungsgemäße Verfahren auf alle relevanten Nährstoffe und Wirkstoffe untersucht, wobei besonderer Wert auf die Schadstoffe gelegt·wird, für die gesetzliche Höchstgrenzen festgelegt sind. Wo bereits gesetzlich vorgeschriebene Klärschlamm-Analysen vorliegen, werden diese insoweit ergänzt, als auch die Gehalte an verwertbaren Elementen analytisch festgestellt werden. Die genannten Analysen sind Teil der sogenannten "dynamischen Bilanz", die bevorzugterweise Teil des erfindungsgemäßen Verfahrens sein kann. Dabei handelt es sich zwar nicht um eine Bilanz im strengen Sinn des Wortes; es wird jedoch Wert darauf gelegt, mit Hilfe der analytischen Untersuchungen die Zusammensetzung der Rohstoffe für den Humifizierprozeß verfahrensgerecht einzustellen und damit nicht nur für einen kontrollierten Gang der Verrottung Sorge zu tragen, sondern auch zu garantieren, daß das Produkt den Anforderungen an Hygiene, Umweltverträglichkeit und biologische Erfordernisse als Bodenverbesserer entspricht.

Die Klärschlämme aus kommunalen und Industrie-Kläranlagen weisen üblicherweise einen relativ hohen Stickstoffgehalt auf, der allein eine Humifizierung unter Mikrobeneinfluß nicht gestattet. Vielmehr ist - wie aus dem Stand der Technik bekannt - der Zusatz eines oder mehrerer organischer Zuschlagstoffe erforderlich. Dadurch kann ein C/N-Verhältnis eingestellt werden, das günstigerweise im Bereich von 15 bis 30 : 1 liegt. Im Unterschied zu den aus dem Stand der Technik bekannten Verfahren spielt jedoch in dem erfindungsgemäßen Verfahren zum Humifizieren von Klärschlämmen das C/N-Verhältnis keine so ausschlaggebende Rolle. So ist es erfindungsgemäß möglich, das C/N-Verhältnis auch auf andere Werte einzustellen. Wird das C/N-Verhältnis auf einen Wert > 30 : 1 eingestellt, so verlangsamt sich lediglich der Humifizierungs-Prozeß. Wird das C/N-Verhältnis auf einen kleineren Wert als 15 : 1 eingestellt, so gehen geringe Mengen an wiederverwertbarem Stickstoff für die Humifizierung verloren. Einstellungen des Verhältnisses außerhalb des Bereiches 15 bis 30 : 1 sind jedoch problemlos möglich, beeinträchtigen die Wirkungsweise und damit den Erfolg des Verfahrens nicht und unterscheiden dieses damit von den aus dem Stand der Technik bekannten Verfahren.

Als organische Zuschlagstoffe können ein oder mehrere Komponenten, die zumindest teilweise aus der Gruppe Stroh, Holzabfälle und Altpapier stammen, verwendet werden. Einer oder mehreren der genannten Komponenten können auch andere organische Stoffe, die als Kohlenstoffquellen für humifizierende Mikroorganismen geeignet sind, zugesetzt werden. Einer, wenn nicht mehrere der genannten Zuschlagstoffe sind in den für das erfindungsgemäße Verfahren erforderlichen Mengen überall verfügbar oder können zumindest preiswert verfügbar gemacht werden. Als organische Substanz hat sich in dem erfindungsgemäßen Verfahren Stroh bewährt. Mit Vorteil werden als organische Substanz Strohmatten verwendet, wie sie in Rollenform bei den heute üblichen Mähdreschvorgängen anfallen. Das bevorzugt verwendete Strohmaterial kann jedoch auch in anderer Form in das Verfahren eingesetzt werden. Der Vorteil der beim Mähdresch-Vorgang anfallenden ausrollbaren Matten liegt darin, daß ihre Ausbreitung auf einer ebenen Freifläche problemlos und schnell möglich ist und daß derartige Matten genau eine solche lockere Schüttung aufweisen, wie sie für das erfindungsgemäße Verfahren essentiell ist. Durch die Konsistenz (lockere Schüttung, große Oberfläche etc.) der organischen Substanz(en) soll bewirkt werden, daß jederzeit ein guter Luftzutritt möglich ist und die spätere Verrottung immer im aeroben Bereich verläuft. Die Mycelbildung der Lignin und Cellulose abbauenden Pilze wird durch einen bei lokkerer Schüttung ebenfalls ausreichenden

4

Makroporenraum besonders gefördert. Zudem trägt die lockere Strohschüttung dazu bei, daß die Rohschlämme kein überschüssiges Sickerwasser an den Boden abgeben, sondern dieses vom Stroh aufgesaugt und damit die Kontamination des Erdreichs mit unerwünschten Materialien verhindert wird. Ein weiterer Vorteil derartiger lockerer Strohschüttungen liegt darin, daß sie gegebenenfalls freigesetzte geruchsbildende Substanzen absorbieren und somit verhindern, daß diese in der Umgebung wahrgenommen werden können. Dies wird dadurch unterstützt, daß bei lockerer Schüttung ein sofortiger Sauerstoffzutritt möglich ist, der den aeroben Abbau des Schlamms einleitet und damit die Freisetzung der durch den anaeroben Abbau entstandenen Fäulnisgase beendet.

Als besonders bevorzugt aufgrund ihrer Zusammensetzung haben sich Strohmatten aus Weizenstroh und/oder Gerstenstroh erwiesen. Strohmatten dieser beiden Getreidearten weisen eine Zusammensetzung auf, die einen leichten mikrobiellen Abbau bei der aeroben Verrottung garantiert.

Es entspricht einer weiteren bevorzugten Ausführungsform des erfindungsgemäßen Verfahrens, als organische Substanzen Mischungen aus Stroh und Holzabfällen, beispielsweise aus Weizenstroh und/oder Gerstenstroh und Holzschliff und/oder Hobelspänen, zu verwenden. Auch mit solchen Mischungen ist - im Gegensatz zu der aus dem Stand der Technik bekannten Verwendung von Sägespänen oder Holzschliff allein - das Aufbringen einer lockeren Schüttung mit großem Makroporenraum möglich, die die gute Belüftung während des Verrottungsvorganges auch im Freien unter gegebenenfalls ungünstigen Wetterbedingungen (Regen) und damit den aeroben Verlauf der Rotte garantiert.

Weiterhin ist es erfindungsgemäß bevorzugt, als organische Substanzen Mischungen aus Stroh und Altpapierschnitzeln zu verwenden. Auch derartige Schüttungen ermöglichen eine aerobe Führung des Verrottungsvorgangs. Besonders bevorzugt ist in den beiden oben genannten Fällen die Verwendung von ausrollbaren Strohmatten, die dann mit Holzabfällen oder Altpapierschnitzeln aufgeschüttet werden und einen ausreichenden Makroporenraum der organischen Substanzen gewährleisten.

Erfindungsgemäß wird der Feststoffgehalt der aus den Kläranlagen entnommenen Rohschlämme auf einen wert von mindestens 25 Gew.-% eingestellt. Dies kann in aus dem Stand der Technik bekannter Weise dadurch geschehen, daß man den Schlamm beispielsweise mit Hilfe von Zentrifugen, Siebbandpressen oder Kammerfilterpressen entwässert. Insbesondere bei der Verwendung von Kammerfilterpressen zur Entwässerung wird ein Feststoffgehalt der Rohschlämme erreicht, der im Bereich von 25 bis 35 Gew.-% liegt. Derartige Rohschlämme sind erfindungsgemäß deswegen bevorzugt, weil dabei die Schlämme in Form von krümeligen Brocken oder einer krümeligen Paste anfallen, die nur noch interzelluläres Wasser enthält und nicht in der Lage ist, größere Mengen von Schlämmwasser an die Umgebung abzugeben. Diese müßte dann von dem als organische Substanz verwendeten Material aufgesaugt werden. Natürlicherweise ist jedoch dessen Kapazität begrenzt, und Schlämme mit Feststoffgehalten im Bereich von 25 bis 35 % setzen keine Wassermengen mehr frei, die als Sickerwasser in das Erdreich eindringen.

In einer bevorzugten Ausführungsform der Erfindung verwendet man Rohschlämme, die vor der Entnahme aus der Kläranlage und vor der Entwässerung, d.h. vor der Einstellung des Feststoffgehaltes, mit solchen gegebenenfalls in Wasser gelösten Substanzen ausgeflockt bzw. behandelt wurden, die für den nachfolgenden Verrottungsprozeß vorteilhaft sein können. Solche Substanzen können beispielsweise Mineralsalze wie Eisensulfate und/oder Polyelektrolyte sein, die man auf diesem Wege den schlammhaltigen Abwässern zum Ausflocken der Rohschlämme zusetzt. Anschließend wird dann erfindungsgemäß, nach Entnahme der Rohschlämme aus dem Klärbecken, der Feststoffgehalt auf einen Wert von mindestens 25 %, bevorzugt auf einen Wert im Bereich von 25 bis 35 Gew.-%, dadurch eingestellt, daß man das Wasser auf einem der oben genannten, an sich bekannten Wege abzieht.

Vor der Ausbringung des Schlamms bzw. der organischen Substanzen können bevorzugterweise als Teil der "dynamischen Bilanz" des erfindungsgemäßen Verfahrens Bodenproben genommen werden. Dies geschieht dann nicht nur zur Kontrolle des Erfolgs des Verfahrens, d.h. der vollständigen Verrottung des aufgebrachten Materials bis zum Dauerhumus, sondern auch zum eventuellen späteren Nachweis der Zusammensetzung des Bodens vor Beginn des mikrobiellen Abbaus der Mischung aus Schlämmen und organischen Substanzen. Die Probenahme erfolgt - sofern sie durchgeführt wird - in an sich bekannter Weise. So werden beispielsweise mit üblichen, innen hohlen Probenahme - Stökken durch Einstechen in den Boden bis in eine Tiefe von 30 cm ("A - Horizont") Bodenproben gezogen. Die Zahl der gezogenen Proben unterliegt keiner strengen Beschränkung; üblich sind jedoch beispielsweise 20 Proben pro ha der Flächen, auf die die Schlämme und organischen Substanzen aufgebracht werden sollen. Die gezogenen Proben werden dann in üblicher Weise aufgeschlossen und analysiert. Bei den Analysen wird besonders Wert auf die in den einschlägigen gesetzlichen Bestimmungen (KlärschlammVO, Abfallbeseitigungsgesetz) angesprochenen Schadstoffe sowie auf Metalle, besonders Schwermetalle, organische Stoffe, Stickstoffverbindungen, Borate und Phosphate gelegt. Für die spätere Verwertung des Humus sind auch Analysen im Hinblick auf die Makronährstoffe und Mikronährstoffe wünschenswert.

EP 0 302 179 B1

Die auf dem oben genannten Weg erhaltenen Schlammbrocken bzw. Schlammpasten bringt man anschließend auf das Stroh und gegebenenfalls die in lockerer Schüttung auf einer ebenen Freifläche ausgebreitete(n) organische(n) Substanz(en) auf. Dies erfolgt in einer Menge, daß das Mischungsverhältnis organische Substanz(en) (einschließlich Stroh) : teilentwässerter Rohschlamm im Bereich von 0,1 bis 0,5 m$^3$ : 1m$^3$ liegt, und kann beispielsweise dadurch geschehen, daß man die Schlammassen nach der Entwässerung in Containern oder auf Förderbändern auf die Freifläche transportiert, wo die Verrottung erfolgen soll. Unmittelbar nach dem Aufbringen werden Schlammaterial und organische Zuschläge miteinander vermischt. Dies geschieht in vorteilhafter Weise dadurch, daß man für die Durchmischung an sich aus dem Stand der Technik bekannte Umsetzgeräte verwendet. Diese Geräte werden beispielsweise bei der Umsetzung von sonst für den Rottevorgang üblichen Rottemieten verwendet. Beispielsweise fräsen sie mit Hilfe einer Frästrommel eine dünne Schicht des Miete-Materials von der Miete ab und werfen dieses "über Kopf" durch an dem Umsetzgerät angebrachte Leitflächen ab und formen das vermischte Material danach zu einer neuen Miete. Die Schneckengänge in der Frästrommel sorgen dabei für eine intensive Durchmischung. Derartige Geräte mischen auch das gemäß dem vorliegenden Verfahren in Schichtform ausgebreitete Material und hinterlassen eine ca. 1 bis 4 m, bevorzugt 2,5 m breite und bis 2 m hohe, sich nach oben verjüngende Miete, in der Kohlenstoffträger und gegebenenfalls Zuschlagstoffe enthaltender Klärschlamm zu einem einheitlich durchmischten Material aufgeschichtet sind.

Durch die Wahl des Materials und der Menge an organischen Zuschlagstoffen im Verhältnis zum darauf aufgebrachten teilentwässerten Rohschlamm kann der Verrottungsvorgang positiv beeinflußt und insbesondere eine ausreichende Durchlüftung durch Bildung eines guten Luftporenvolumens erreicht werden. In der erfindungsgemäßen Verfahrens weise stellt man dazu ein Mischungsverhältnis organische Substanz(en) (einschließlich Stroh) : teilentwässerter Rohschlamm von 0,1 bis 0,5 m$^3$ organische Substanz : 1 m$^3$ Schlamm ein.

Nach intensiver Durchmischung liegt ein Material vor, dessen Strukturierung eine selbständige aerobe Verrottung dadurch garantiert, daß in der gesamten Schicht des Gemischs durch ausreichende Makroporenräume ein permanenter Sauerstoffzutritt möglich ist und dadurch gewährleistet wird, daß die humifizierenden Mikroben immer im aeroben Milieu arbeiten.

In einer bevorzugten Ausführungsform des Verfahrens werden auch nach dem Aufbringen der Schlämme und organischen Sustanzen auf die Freiflächen im Rahmen der "dynamischen Bilanz" Bodenproben gezogen. Dies geschieht in der oben beschriebenen Weise und liefert Aufschluß über die Veränderungen, die sich aus der Ausbringung der Materialien ergeben.

Probleme in den aus dem Stand der Technik bekannten Verfahren gab es immer wieder dadurch, daß zwar die Außenbereiche der Mieten oder Bioreaktoren ausreichend mit Luft versorgt wurden, jedoch immer die Gefahr bestand, daß die Innenräume der Mieten bzw. Reaktoren mangels Luftzutritt "umkippten", also anaerob unter Bildung übelriechender Fäulnisgase abgebaut wurden. Dies wird erfindungsgemäße dadurch verhindert, daß man zur selbständigen Verrottung des Gemisches eine Freifläche von mindestens 4 m$^2$ pro m$^3$ Klärschlamm zur Verfügung stellt und die Rotte so aufschichtet, daß sich die Mieten nach oben verjüngen. Dadurch werden die Gemischschichten nie so dick, daß anaerobe Bereiche entstehen können.

Erfindungsgemäß ist es - aufgrund der lockeren Struktur des Gemisches aus Klärschlamm und organischen Substanzen (einschließlich Stroh) und einer guten Vermischung der Komponenten zu Beginn des Rotte-Vorgangs - nicht erforderlich, die einmal gebildete Schicht häufig umzusetzen und dadurch die Sauerstoffversorgung und Durchmischung weiter zu verbessern. Um den Verrottungsprozeß zu beschleunigen, kann es jedoch vorteilhaft sein, das Gemisch mit den oben beschriebenen Umsetzgeräten einmal oder auch mehrmals, üblicherweise maximal dreimal, umzusetzen. Dadurch wird in vorteilhafter Weise das Gemisch noch besser homogenisiert und die Porenstruktur weiter verbessert und eine noch bessere, d.h. schnellere Humifizierung des Materials erreicht.

Entsprechend der oben genannten, bevorzugten Ausführungsform des Verfahrens wird im Rahmen der "dynamischen Bilanz" auch der fertige Humus analysiert und dadurch kontrolliert, welche in den Ausgangsschlämmen und den organischen Substanzen vorhandenen Stoffe sich durch den mikrobiellen Abbau in Humus umgesetzt haben. Gleichzeitig wird für das Verkaufsprodukt Humus die Analyse der Zusammensetzung ermittelt, die für den späteren Verwender Anhaltspunkt für den Einsatz bzw. für das gegebenenfalls erwünschte Zumischen weiterer Komponenten zur Bodenverbesserung sein kann. Gegebenenfalls ist es auch möglich, im späteren Verlauf der Humusverwendung noch Analysen der auf dem verbesserten Boden gewachsenen Pflanzen und der damit produzierten Früchte mit in die "dynamische Bilanz" einzubeziehen und dadurch (bis auf die gasförmigen Stoffwechselprodukte) eine vollständige Bilanz der Verwertung der als Schlamm bzw. organische Substanz eingebrachten Edukte und der mit ihrer Hilfe hergestellten Produkte zu erstellen.

Gegenüber den aus dem Stand der Technik bekannten Verfahren weist das erfindungsgemäße Verfahren folgende Vorteile auf:

Durch inniges Vermischen und lockeres Aufschütten von Klärschlamm mit einem oder mehreren organischen Substanzen, die überall preiswert verfügbar sind, wird das sonst nur deponierbare oder verbrennbare Abfallprodukt "Klärschlamm" einer aeroben Zersetzung zugeführt und zusammen mit den organischen Materialien wieder vollständig in den natürlichen Kreislauf eingeschleust. Das erfindungsgemäße Verfahren kommt dabei ohne komplizierte Verrottungstürme oder Bioreaktoren aus, deren Erstellung nicht nur kostenintensiv ist, sondern auch das Landschaftsbild stört. Die mit dem erfindungsgemäßen Verfahren garantierte selbständige aerobe Verrottung der Mischung erfolgt ohne Geruchsbelästigung und ohne die Gefahr eines "Umkippens" in die anaerobe Verfaulung. Die bei dem natürlichen Verrottungsprozeß entstehende Wärme (maximal 60 bis 80 °C) tötet Ungeziefer und pathogene Erreger, insbesondere Wurmeier, Salmonellen, Colibakterien und Enterobacteriaceen im Klärschlamm ab und hygienisiert dadurch · das Material so, daß das Produkt den gesetzlichen Vorschriften entspricht. Dazu tragen auch die während der "Pilzphase" als Stoffwechselprodukte der Pilze gebildeten Antibiotika bei. Schadstoffe, wie z.B. Schwermetallionen, werden - soweit vorhanden - biologisch durch organische Bindung in die Mikroben-Substanz im entstehenden Humus gebunden. Das entstehende Material ist geruchlos, fällt in krümelig-erdähnlicher Konsistenz an und kann als Humuserde für den Landschafts- und Gartenbau und als wertvoller Dünger in der Landwirtschaft verwendet und damit einer biologischen Verwertung zugeführt werden. Das Verfahren eignet sich dadurch besonders gut zur Praktizierung in der Landwirtschaft. Sowohl die als Rohprodukt eingesetzten Klärschlämme als auch die als Kohlenstoffquelle für die Mikroben verwendeten Organo-Komponenten werden in den natürlichen Kreislauf zurückgeführt und müssen nicht aufwendig entsorgt und deponiert werden.

Die Erfindung wird durch das nachfolgende Anwendungsbeispiel näher erläutert.

Anwendungsbeispiel

Als Rohschlamm wurde ein Klärschlamm aus der Kläranlage der Stadt Lemgo verwendet, der vor der Umwandlung die in der nachfolgenden Tabelle angegebene Zusammensetzung aufwies.

Der Klärschlamm wurde nach Entnahme aus der Kläranlage durch Behandlung in Zentrifugen (Dekantern) auf einen Feststoffgehalt von ca. 25 Gew.-% eingestellt.

Die nach Entwässerung pastenförmig-krümeligen Schlammbrocken wurden auf Gerstenstrohmatten in einem Mischungsverhältnis organische Substanzen : teilentwässerter Rohschlamm von 0,1 bis 0,5 m³ : 1 m³ aufgebracht und mit den beschriebenen Umsetzmaschinen intensiv vermischt.

Im Verlauf des Rottevorgangs stieg die Temperatur im Verlaufe von 4 Tagen durch die intensive Tätigkeit der aeroben, thermophilen, abbauenden Mikroorganismen auf einen Bereich von 60 bis 70 °C an. Danach entwickelte sich die sogenannte Pilzphase, während der in kurzer Zeit das gesamte Material von Cellulose und Lignin abbauenden Pilzen vollständig durchwuchert wurde.

Nach Abklingen der erhöhten Temperaturen wurde mit Hilfe der oben beschriebenen Umsetzmaschinen das Material einmal umgesetzt, um für ausreichende Makroporenräume, d.h. eine ausreichende Sauerstoffversorgung, zu sorgen.

Nach 2,5 Monaten war die Umwandlung des Klärschlamms zu Humus beendet. Das humifizierte Material wies nach der Umwandlung die in der nachfolgenden Tabelle angegebene Zusammensetzung auf. Es konnte mit Erfolg als landwirtschaftlicher Dünger sowie als Erde für den Landschaftsbau verwendet werden.

7

TABELLE

Analysendaten des Klärschlamms vor und nach der Humifizierung

| | Vor Umwandlung | Nach Umwandlung |
|---|---|---|
| **Analyse** | | |
| Konsistenz | teigig, matschig | krümelig, locker |
| Geruch | faulig, stinkig | leicht erdig, neutral |
| Vol.-Gewicht (kg/cbm) | 800 | 550 |
| Makroporenraum (ml/l) | 330 | 620 |
| Trockenmasse (% d. Mat.) | 25 | 40 |
| org. Substanz (% i.T.) | 35 | 53 |
| pH-Wert (i. Wasser) | 7,2 | 7,2 |
| C = Kohlenstoff (Gew.-%) | 20,3 | 25 |
| N = Stickstoff (Gew.-%) | 7,3 | 0,3 |
| C/N-Verhältnis | 3 | 70 |
| **Makronährstoffe** $(kg/m^3)$ | | |
| P = $P_2O_5$ | 9 | 8 |
| K = $K_2O$ | 0,2 | 2,1 |
| Mg = MgO | 2,2 | 2,6 |
| Ca = CaO | 10,8 | 15,9 |

Fortsetzung

Fortsetzung Tabelle

|  | Vor Umwandlung | Nach Umwandlung |
|---|---|---|
| **Mikronährstoff** (ppm i.T.) | | |
| Zn = Zink | 1899 | 598 |
| **Schadstoffe** (ppm i.T.) | | |
| Cd = Cadmium | 8,3 | 1,4 |
| Cr = Chrom | 213 | 22 |
| Cu = Kupfer | 454 | 106 |
| Hg = Quecksilber | 5,7 | 1,4 |
| Ni = Nickel | 44 | 13,5 |
| Pb = Blei | 328 | 54,5 |
| **Mikrobiologischer Befund** | | |
| Aktivität | hoch | typisch |
| Leitorganismen | poly-β-mezosaprob | $\alpha$-mezosaprob + oligosaprob |
| Pathogene | Enterobacteriaceen: über 120 | unter 40 |
| | Colibakterien | negativ |
| | Wurmeier | negativ |

. . .

**Patentansprüche**

1. Verfahren zum Humifizieren von Klärschlämmen unter Versetzen der teilentwässerten Rohschlämme mit einer oder mehreren organischen Substanz(en), zumindest teilweise aus der Gruppe Stroh, Holzabfälle und Altpapier, dadurch gekennzeichnet, daß man

(a) Stroh in lockerer Schüttung auf einer ebenen Freifläche ausbreitet;
(b) den auf einen Feststoffgehalt von mindestens 25 Gew.-% eingestellten Rohschlamm, dessen Schwermetallgehalt unter den gesetzlichen Höchstwerten liegt, in einer solchen Menge darauf aufbringt, daß das Mischungsverhältnis organische Substanz(en) : teilentwässerter Rohschlamm im Bereich von 0,1 bis 0,5 m$^3$ : 1 m$^3$ liegt;
(c) danach unmittelbar alle Komponenten miteinander mittels an sich bekannter Umsetzgeräte vermischt; und
(d) das so entstandene Gemisch auf einer Freifläche mit einer Größe von mindestens 4 m$^2$ pro m$^3$ Klärschlamm der selbstständigen aeroben Verrottung bis zur Humifizierung des Materials überläßt.

2.  Verfahren nach Anspruch 1, dadurch gekennzeichnet, daß man Stroh in Form ausrollbarar Matten, wie sie beim Mähdreschvorgang anfallen, bevorzugt Weizenstroh- und/oder Gerstenstrohmatten, verwendet.

3.  Verfahren nach einem der Ansprüche 1 und 2, dadurch gekennzeichnet, daß man Mischungen aus Stroh und Holzabfällen, bevorzugt aus Weizenstroh und/oder Gerstenstroh und Holzschliff und/oder Hobelspänen, oder Mischungen aus Stroh und Altpapierschnitzeln, gegebenenfalls neben anderen organischen Stoffen verwendet, die als Kohlenstoffquellen für humifizierend wirkende Mikroben geeignet sind.

4.  Verfahren nach einem oder mehreren der Ansprüche 1 bis 3, dadurch gekennzeichnet, daß man den Feststoffgehalt der Rohschlämme auf einen Wert im Bereich von 25 bis 35 Gew.-% einstellt.

5.  Verfahren nach einem oder mehreren der Ansprüche 1 bis 4, dadurch gekennzeichnet, daß man den Rohschlämmen vor der Entnahme aus dem Klärbecken und der Einstellung des Feststoffgehalts für die Verrottung vorteilhafte Mineralsalze und/oder Polyelektrolyte zusetzt.

6.  Verfahren nach einem oder mehreren der Ansprüche 1 bis 5, dadurch gekennzeichnet, daß man zur selbständigen Verrottung des Gemischs die Rotte so aufschichtet, daß sich die Mieten nach oben verjüngen.

7.  Verfahren nach einem oder mehreren der Ansprüche 1 bis 6, dadurch gekennzeichnet, daß man die Verrottung des Gemischs durch ein- oder mehrmaliges Umsetzen fördert.

## Claims

1.  A process for transforming activated sludge into humus including mixing the partially dehydrated base sludges with one or several organic substance(s) belonging, at least in part, to the group of straw, wood scraps and waste paper,
    characterised in that

    a) straw in bulk is spread on a flat open-air surface;
    b) the base sludge which has been dehydrated to a solid matter content of at least 25 wt. % and the heavy metal content of which is below the legal maximum limit is distributed thereupon in such a quantity that the mixture ratio of organic substance(s) : partially dehydrated base sludge is in the range of 0.1 to 0.5 m$^3$ : 1 m$^3$.
    c) all components are mixed immediately afterwards by means of shuffling devices known per se; and
    d) the mixture thus created is left on an open-air surface having a space of at least 4 m$^2$ per 1 m$^3$ of activated sludge to undergo an unaided aerobic decaying process until the material has been transformed into humus.

2.  A process according to claim 1,
    characterised in that straw in the shape of unrollable mats as occur as a result of the threshing process, preferably wheat straw and/or barley straw, mats are used.

3.  A process according to any of the claims 1 and 2,

characterised in that mixtures of straw and wood scraps, preferably of wheat straw and/or barley straw and wood pulp and/or wood shavings, or mixtures of straw and waste paper scraps are used, possibly in addition to other organic substances suitable as sources of carbon for microbes having a humifying activity.

4. A process according to one or several of the claims 1 to 3,
characterised in that the solid matter content of the base sludges is adjusted to a value in the range of 25 to 35 wt. %.

5. A process according to one or several of the claims 1 to 4,
characterised in that mineral salts and/or polyelectrolytes beneficial for the decaying process are added to the base sludges before removal from the settling basin and before adjusting the solid matter content thereof.

6. A process according to one or several of the claims 1 to 5,
characterised in that, in order to support the unaided decaying process of the mixture, the rotting matter is piled in such a way that the clamp tapers upwards.

7. A process according to one or several of the claims 1 to 6,
characterised in that the decaying process of the mixture is assisted by shifting the mixture once or several times.

**Revendications**

1. Procédé de transformation en humus de boues de décantation par mélange des boues brutes partiellement déshydratées avec une ou plusieurs susbtance(s) organique(s), choisie(s) au moins partiellement parmi le groupe comportant de la paille, des déchets de bois et des vieux papiers, caractérisé en ce qu'
    (a) on étale la paille en vrac de façon meuble sur une surface plane à l'air libre;
    (b) on dispose la boue brute comportant une teneur en matières solides d'au moins 25% en poids, dont la teneur en métaux lourds est inférieure aux valeurs maximales légales, selon une quantité telle que le rapport de mélange substance(s) organique(s) : boue brute partiellement déshydratée soit compris entre 0,1 à 0,5 m$^3$ : 1 m$^3$;
    (c) on mélange ensuite immédiatement tous les constituants entre eux au moyen d'appareils de décomposition en soi connus; et
    (d) on laisse le mélange ainsi obtenu sur une surface à l'air libre selon une grandeur d'au moins 4 m$^2$ par m$^3$ de boue de décantation, subir un pourrissement aérobie naturel jusqu'à transformation du matériau en humus.

2. Procédé selon la revendication 1, caractérisé en ce qu'on utilise de la paille sous forme de mats déroulables, ainsi qu'ils résultent du processus de moissonnage-battage, de préférence des mats de paille de blé et/ou de paille d'orge.

3. Procédé selon l'une des revendications 1 et 2, caractérisé en ce qu'on utilise des mélanges de paille et de déchets de bois, de préférence de paille de blé et/ou de paille d'orge et de pâte de bois et/ou de copeaux, ou des mélanges de paille et de rognures de vieux papiers, éventuellement en plus d'autres matériaux organiques, qui sont appropriés en tant que sources de carbone pour des microbes provoquant la transformation en humus.

4. Procédé selon l'une quelconque des revendications 1 à 3, caractérisé en ce qu'on fixe la teneur en matières solides des boues brutes à une valeur comprise entre 25 et 35 % en poids.

5. Procédé selon l'une quelconque des revendications 1 à 4, caractérisé en ce qu'on ajoute aux boues brutes avant le prélèvement du bassin de décantation et la détermination de la teneur en matières solides, des sels minéraux et/ou des polyélectrolytes favorisant la décomposition.

6. Procédé selon l'une quelconque des revendications 1 à 5, caractérisé en ce qu'en vue du pourrissement naturel du mélange, on empile le produit de sorte que les meules s'amincissent vers le haut.

11

7. Procédé selon l'une quelconque des revendications 1 à 6, caractérisé en ce qu'on favorise le pourrissement du mélange par une ou plusieurs décompositions.